(19) Europäisches Patentamt / European Patent Office / Office européen des brevets

(11) **EP 3 731 159 A1**

(12) **EUROPEAN PATENT APPLICATION**

(43) Date of publication:
**28.10.2020 Bulletin 2020/44**

(51) Int Cl.:
**G06Q 10/04** *(2012.01)*    **G06Q 30/02** *(2012.01)*
**G06Q 10/06** *(2012.01)*    **G06Q 50/06** *(2012.01)*

(21) Application number: **20170947.4**

(22) Date of filing: **22.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.04.2019 US 201962837012 P**
**17.04.2020 US 202016852152**

(71) Applicant: **Xendee Corporation**
**San Diego, CA 92121 (US)**

(72) Inventors:
• **PECENAK, Zack**
  **Richfield Springs, NY New York 13439 (US)**
• **STADLER, Michael**
  **Encinitas, CA California 92024 (US)**

(74) Representative: **Fish & Richardson P.C.**
**Highlight Business Towers**
**Mies-van-der-Rohe-Straße 8**
**80807 München (DE)**

(54)    **ADAPTIVE MULTIYEAR ECONOMIC PLANNING METHOD FOR ENERGY SYSTEMS, MICROGRID AND DISTRIBUTED ENERGY RESOURCES**

(57)    The embodiments disclosed herein are directed to an adaptive, multiyear economic planning method and apparatus for energy systems, microgrid and distributed energy resources. The planning method that uses optimization, simulation, or modeling that takes into account cost calculations, emission calculations, technology investments and operation in a computer or cloud-based environment. In an embodiment, the computing platform is deployed on a network that can be accessed by a variety of stakeholders. In an embodiment, the planning platform implements at least one of artificial intelligence, machine learning, forecasting or historical data to estimate various planning parameters for one to an infinite number of years.

FIG. 1

**Description**

**CROSS-REFERENCE TO RELATED APPLICATION**

This application claims the benefit of priority from Provisional Patent Application No. 62/837,012, filed April 22, 2019, for "ADAPTIVE MULTIYEAR ECONOMIC PLANNING METHOD FOR ENERGY SYSTEMS, MICROGRID AND DISTRIBUTED ENERGY RESOURCES," the entire contents of which is incorporated herein by reference.

**TECHNICAL FIELD**

The subject matter of this application relates generally to cloud computing and computer information systems applications for energy generation and usage planning.

**BACKGROUND**

Conventional Microgrid and Distributed Energy Resources (DER) project planning methods fail to forecast for multiple years into the future using a time effective simulation and optimization approach. For example, conventional Microgrid and DER project planning is typically performed by modeling, simulating, or optimizing energy and power provisions in a compute or cloud-based environment that considers among others factors: 1) grid conditions; 2) technology, fuel, and electricity pricing; 3) regulatory changes; and 4) climate conditions, where the objective is to minimize cost and emissions while maximizing resilience and reliability of the system under the physical constraints of the system. The physical constraints are applied at discrete intervals, which typically represent a time series (e.g., 8760 timesteps representing a year at hourly intervals).

Shorter time intervals or longer horizons lead to increases in solution time since the number of calculations are increased. Shorter time intervals provide the benefit of capturing dynamic behavior caused by climate transients or random failures. Longer time horizons provide the benefit of incorporating price or regulatory changes. The conventional method of extending the time horizon is referred to hereafter, as the "forward-looking" approach. To save runtime, planning tools typically are only applied for a year (a "single year projection"), where future conditions are either ignored or averaged into the current data.

The effect of the single year projection is that all input data is considered frozen for the entire project lifetime, which is unrealistic. However, Microgrid and DER project planning decisions produce recommendations for investment, operation, and placement that apply to equipment and infrastructure with lifespans up to 50 years which can be significantly different than a single year projection in terms of capital investment or financial agreements.

The energy, Microgrid and DER recommendations based on a single year projection will not be valid in future years as the energy landscape changes and could result in significant economic loss for stakeholders in the project and environmental impacts on society at large. Further, projections of Net Present Value (NPV) and Internal Rate of Return (IRR), which are critical indicators of project viability can be significantly skewed using a single year projection, lowering the likelihood and confidence of investment in Microgrid and DER projects.

When multiple years are considered, the planning is performed by modeling, simulating, or optimizing considering the entire horizon of years simultaneously, by expanding the number of timesteps, i.e. the forward-looking approach. This approach necessitates solving the entire time horizon simultaneously, assuming perfect knowledge about each timestep. However, when applying this approach, the time required to model, simulate, or optimize increases non-linearly with the number of years, typically in a non-predictable manner. Depending on the time horizon, time increases can be as large as 10,000%.

Simplifications to the Microgrid and DER system that is being modeled, simulated, or optimized is typically employed to combat the time increase. However, such simplifications distort the reality that the economic planning is emulating, thus resulting in inaccurate recommendations for investment, operation, and placement that apply to equipment and infrastructure.

In sum, there is no existing methods that can plan over multiple years, provide an acceptable result and have a predictable increase in runtime.

**SUMMARY**

The embodiments disclosed herein are directed to a fast and adaptive Microgrid and DER planning method that uses optimization, simulation, or modeling that takes into account cost calculations, emission calculations, technology investments and operation in a computer or cloud-based environment. In an embodiment, the computing platform is deployed on a network (cloud computing platform) that can be accessed by a variety of stakeholders (e.g., investors, technology vendors, energy providers, regulatory authorities). In an embodiment, the planning platform implements at least one of artificial intelligence (AI), machine learning, forecasting, or historical data to estimate various planning parameters for one to an infinite number of years.

The disclosed adaptive method does not change the underlying problem formulation model. Instead, it solves either a single year or multiple year horizon solution repeatedly, making investment decisions at the beginning of the horizon (e.g., before the first year). With the adaptive method each solution represents a different starting year and is dependent on the prior solution (years). The input parameters such as electricity, heating, cooling, or other demand, prices, and regulatory constraints for each solution are updated to match the forecasted value for the given year or horizon. Investment decisions made in previous years are considered fixed and carried into the current solution, where new investments can be made. When a technology asset reaches its useful lifetime, the asset is discarded and the solver (e.g., linear programing (LP) optimization solver or simulation) is able to invest freely to fill the void (or not invest at all if it makes economic or environmental sense).

The method disclosed herein is called "adaptive" since it only uses a shorter time horizon (one to several years), and applies current data to make investment decisions and ignores a portion of the future. Note to differentiate between a conventional forward-looking approach and the disclosed adaptive approach, the time horizon should be less than the full lifetime of the project.

The adaptive method inherently weights information in the first years more heavily than future conditions, as investment decisions are made sequentially ignoring some of the future information. Since decisions from previous years are considered fixed, the method returns only additional investment and provides recommendations that will save cost with changing conditions. The adaptive method does not necessarily guarantee the lowest cost solution over the project lifetime, given future forecasts (assuming a perfect forecast, which does not exist). Instead, the adaptive method makes decisions sequentially, as more up to date information is available, taking advantage of the most accurate first year information.

In terms of runtime, the adaptive method solves a subset of timesteps simultaneously, Y times, indicating a linear time increase (e.g., for a 20 year solution at hourly interval you are solving 8760 timesteps simultaneously 20 times). In contrast, if the forward-looking approach is used, the solver must solve all timesteps simultaneously (i.e. for a 20 year solution at an hourly interval there is 175,200 simultaneous timesteps). Lower simultaneous timesteps is computationally desirable, since solution run-times grow non-linearly with the number of timesteps, due to an increase in the number of possible solutions.

The input to the model is a system state representing: (1) the current technology assets on-site or in the energy system, which are real assets in the first solution, then chosen assets for later simulations; and (2) the system constraints such as energy prices, regulations, and climate conditions. The adaptive method uses either a forecasting technique such as AI (including machine learning), stochastic or deterministic approaches, or can be user specified at the onset of the optimization. The forecasted or user specified data is used in the adaptive method for the time horizon being considered.

Particular embodiments provide one or more of following advantages. The disclosed adaptive multiyear planning method for energy systems, microgrids and DERs provides accurate planning output over multiple years with a predictable increase in runtime.

## DESCRIPTION OF DRAWINGS

FIG. 1 is a conceptual block diagram illustrating the adaptive method approach to the multiyear planning problem and introduces the flow of information, according to an embodiment.

FIG. 2 is an example plot of runtime for different multiyear approaches as a function of the number of years considered, according to an embodiment.

FIG. 3 is a graph that shows the difference in objective functions for a typical single year analysis, the adaptive method, and the forward-looking approach, according to an embodiment.

FIG. 4 describes a high level example problem formulation for energy, microgrid, or DER projects where there is an objective that is subject to realistic operating constraints, according to an embodiment.

FIG. 5 is a graph that shows normalized representative forecasts for the price of electricity, natural gas, energy, solar PV and Canadian CO2 tax, according to an embodiment.

FIG. 6 is a flow diagram of an adaptive, multiyear planning process for energy systems, microgrids and DERs, according to an embodiment.

FIG. 7 is an example client device architecture for implementing the features and processes described in reference to FIGS. 1-6, according to an embodiment.

FIG. 8 is an example server computer architecture for implementing the features and processes described in reference to FIGS. 1-6, according to an embodiment.

**DETAILED DESCRIPTION**

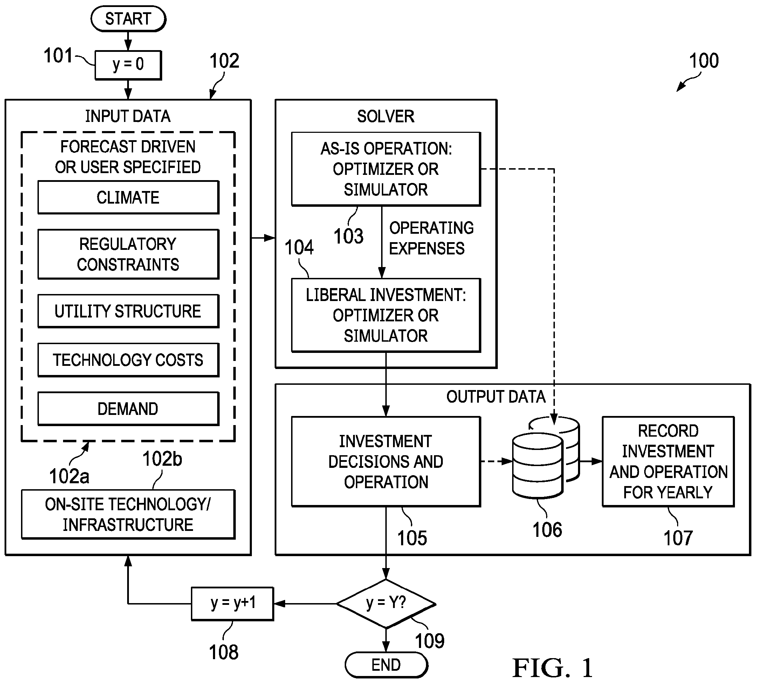

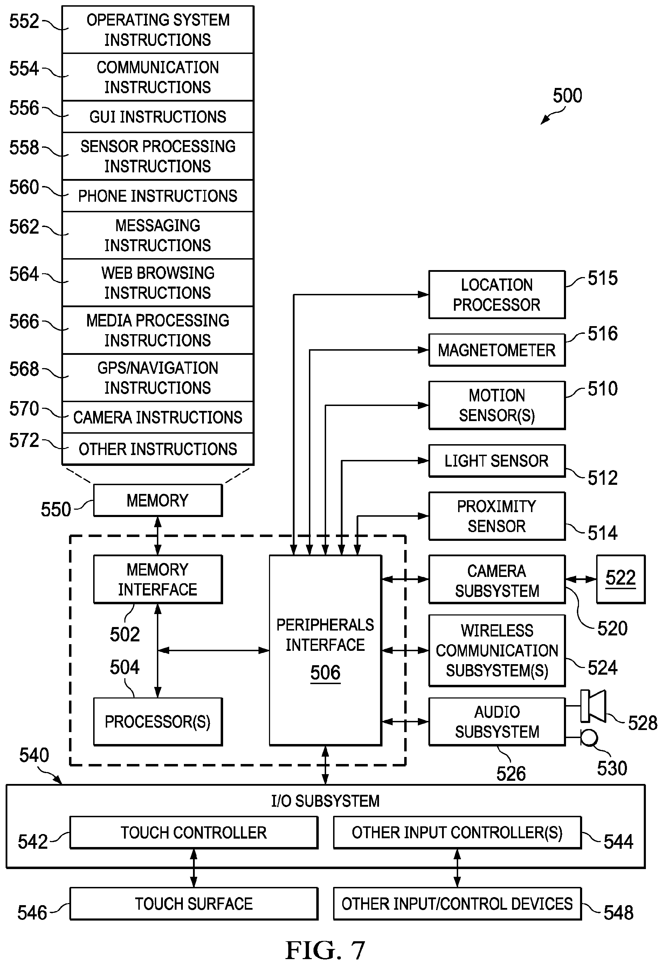

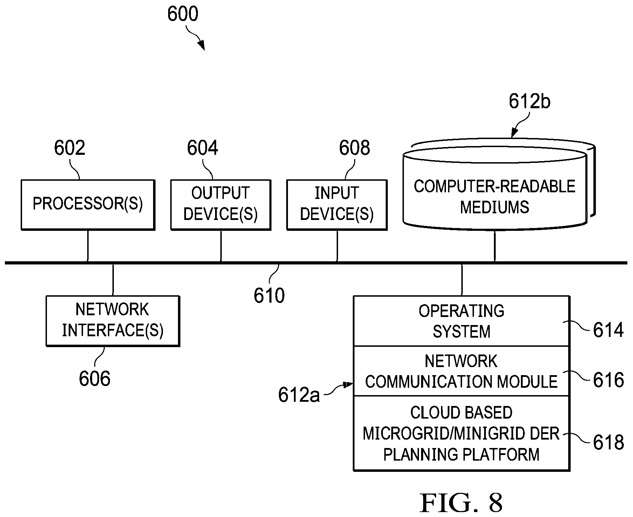

FIG. 1 is conceptual block diagram illustrating an adaptive AI-enabled microgrid and DER planning method ("adaptive method"), according to an embodiment. The adaptive method estimates microgrid and DER planning parameters for a particular energy site, place, building, or geographic region under consideration by a stakeholder (hereinafter collectively referred to as a "facility") for multiple years. The planning parameters include but are not limited to: technology mix, costs, CAPEX, OPEX, NPV, IRR, return on investment (ROI), and environmental impact. The adaptive method can be implemented using a cloud-based computing platform (See FIG. 7), where stakeholders access the platform through a network (e.g., the Internet) using a desktop computer or mobile device (See FIG. 8).

The adaptive method employs two main approaches to data gathering: 1) a forecasting approach which can be from AI, machine learning, statistical, or deterministic approaches; and 2) user specified or forecasted estimated future values. The AI used in the adaptive method can include one or more formal methods (e.g., one or more mathematical models) or one or more machine learning algorithms (e.g., one or more multilayer convolutional neural networks).

In an embodiment, the adaptive method used to solve the economic planning can include two or more linear or non-linear cascaded solvers, such as simulation, linear programming (LP) optimization, or modeling. The solvers can be stochastic or deterministic in nature.

As used herein, a "power grid" is a network of power providers and consumers that are connected by transmission and distribution lines and operated by one or more control centers. As used herein a "microgrid" or "minigrid" is a group of interconnected loads and DER systems within defined electrical boundaries that act as a single controllable entity with respect to the power grid. A microgrid/minigrid can connect and disconnect from the power grid to enable it to operate in both grid-connected or island-mode. As used herein, "DER" systems are small-scale power generation or storage technologies (typically in the range of 1 kW to 10,000 kW) used to provide an alternative to, or an enhancement of, a traditional power grid. Microgrid can also include heat, cooling, and other forms of energy delivery. The discussed method can be applied to the power grid, microgrid, minigrid, or other forms of DERs.

*General approach*

Referring to FIG. 1 the adaptive method is initialized with a timeseries of input data 102 that includes forecast driven and/or user-specified input data 102a including, but not limited to: climate resource, utility cost, technology costs, energy demand, regulatory tariffs and taxes which is either user specified or generated from an AI-enabled, statistical, or deterministic forecast. Input data 102 also includes existing technology/infrastructure 102b at the energy site. In an embodiment, a year index "y" can be initialized to zero during initialization and is incremented 108 until the year equals 109 a specified time horizon "Y".

The input data 102 shown in FIG. 1 is input into first solver 103 that is implemented using at least one of an optimizer, simulator, or modeler to determine the operating state of the energy system in its current state (e.g., current operating expenses) where no investment is made yet. In an embodiment, the operating state of the current energy system can include but is not limited to: a dispatch of existing generation sources, operating expenses, and resilience metrics for a one to several years horizon. The operating state of the current system is stored in database 106.

The operating state of the current system over the considered horizon (e.g., operating expenses) is used as an input to second solver 104 that is implemented using at least one of an optimizer, simulator, or modeler. Second solver 104 determines operation and investment into new technologies to achieve lowest cost and improve resilience metrics over the current system for the one to "Y" year time horizon. The investment decisions are made and assumed to be installed at the beginning of the time horizon "Y" (e.g., the first day). The investment decisions and operating expenses output by solver 104 are stored in database 106. The investment decisions are combined with existing generation resources on the energy site and the current system is updated (hereinafter, the "updated system").

The adaptive method steps described above are repeated in an iterative process. The time series data generated in the first step are now representative of the next year "y" of the time the horizon "Y". Database 106 which stores the data output by each solver 103, 104, is accessed following the completion 109 of the iterative process. The data stored in database 106 is used to calculate lifetime metrics for the project, including but not limited to: IRR, NPV, and ROI. The number of years to consider for the complete time horizon is variable from one to infinity, and is limited only by computer run-time.

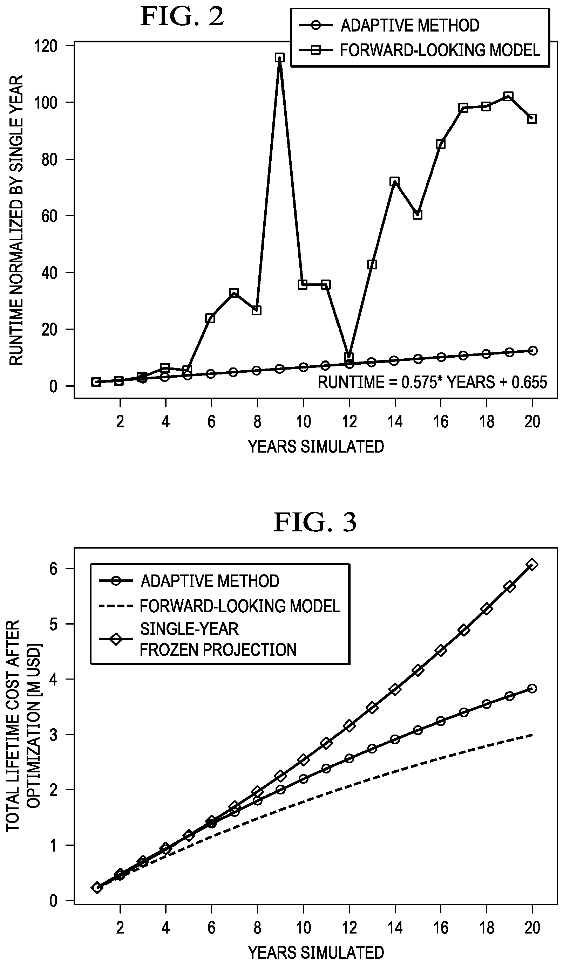

FIG. 2 is an example plot of runtime for different multiyear approaches as a function of the number of years considered, according to an embodiment. The solid line with square markers is the conventional forward-looking approach to the multiyear problem, where the number of time steps is simply extended. The solid line with circle markers is the adaptive method disclosed herein. FIG. 2 shows a linear increase in runtime for the adaptive method versus a sporadic trend resulting from the forward-looking method.

FIG. 3 is a graph that shows the difference in objective functions for a typical single year analysis, the adaptive method (shown as a solid line with circle markers), and the forward-looking method (shown as a dashed line), according to an embodiment. The graph indicates that under the guise of a perfect forecast, the adaptive method loses a small amount of accuracy compared to the forward-looking method, but still improves on a single year projection (shown as a solid line with diamond markers).

*User Specified Forecasts*

The list of input variables that can be used in solvers 103, 104, include but are not limited to: (i) solar irradiance; (ii) solar performance; (iii) wind speed; (iv) wind performance; (v) customer demand for a number of end uses (e.g., such as electrical, cooling, refrigeration, thermal, hot water, steam, chilled water); (vi) utility tariffs including energy tariffs (e.g., time of use, dynamic or real time rates), and tiered tariffs, demand charges, standby costs, backup power charges, and fuel charges (e.g., natural gas, diesel, hydrogen); (vii) regulatory constraints (e.g., carbon taxes, emissions limits, incentives); and (viii) technology costs (e.g., capital expenses and operating expenses).
The user can specify the forecasted values manually for the lifetime of the project. The forecasts can be set completely or partially by the user, and missing data is filled in by an AI forecaster. Users can specify forecasted values, by either specifying exact values to use, or percentage changes that can apply to previous data. When using exact values, users can either specify time-series data or average values, which the AI forecaster will turn into the time series. Further, the user could enter the values or draw curves to represent the values. Similarly, percentages can be specified by the user as a time series, a table or as a curve. The numbers can apply to either the first year data, or data from a previous year.

*Automated Forecasts*

In an embodiment, the automated forecasts are generated using one or more of AI, machine learning, statistical or deterministic models. The automated forecasts can use various sources, including but not limited to: historical data, published opinions, legal proceedings, or other forecasts in their predictions. The automated forecasts can provide the input data 102a required to run the model that is not specified by the user, including, but not limited to, any of the input data 102a shown in FIG. 1. In an embodiment, the automated forecast will determine where users did not identify data points and fill in those data points.

*Numerical Example - Adaptive Method*

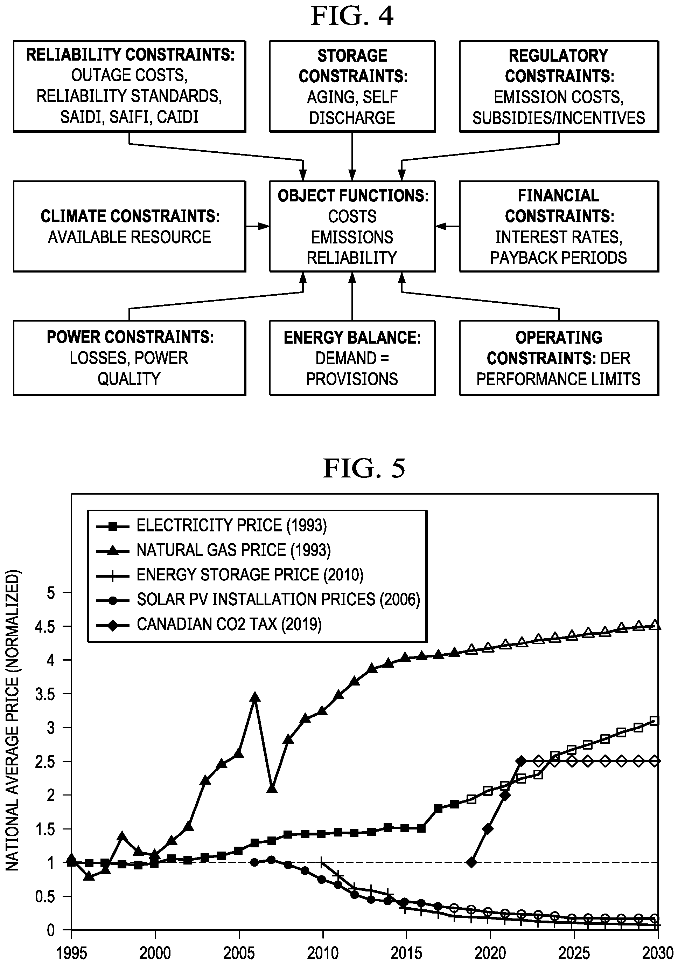

FIG. 4 describes a high level example problem formulation for energy, microgrid, or DER projects where there is an objective that is subject to realistic operating constraints, according to an embodiment. For example, objective functions can be used to minimize cost, emissions and reliability subject to an energy balance constraint, wherein energy demand equals energy provisions. Constraints on the objective functions can also include but are not limited to: reliability constraints (e.g., outage costs, reliability standards, SAID, SAIFI, CAIDI), energy storage constraints (e.g., aging, self-discharge), financial constraints (e.g., payback periods, interest rates), power constraints (e.g., losses, power quality) and climate constraints (available resource).
A practical example of the adaptive method described using a 1-year time horizon is given here using a linear programming optimization approach. A simple objective function representative of economic planning is given by Equation [1], and includes cost of tariff ($c_{tariff}$), plus cost of fuel ($c_{fuel}$), plus cost of DER ($c_{DER}$), plus cost of carbon emissions ($c_{carbon}$) minus sales ($r_{sales}$):

$$\min c : c_{tariff} + c_{fuel} + c_{DER} + c_{carbon} - r_{sales}, \qquad [1]$$

which is subject to an Energy Balance constraint Equation [2]:

$$\text{Energy Balance:} \; L_{i,e} + \Sigma_{t=1}^{T}\big(S_{i,t,e} + K_{i,t,e}\big) = \Sigma_{t=1}^{T} P_{i,t,e} + U_{i,e}, \qquad [2]$$

where "e" is a specific end use type, such as electricity or refrigeration, index "i" is representative of any time instance over the time horizon and index "t" represents the contributions of a single technology. The Energy Balance equation above states that the summation of the energy demand "L", the energy consumed by any technology "K" (e.g., battery or absorption chillers) and the energy sold from the energy system "S", must be balanced with the sum of the energy produced by the energy system "P", and the energy purchased for the energy system "U". The objective in this example is to minimize the operation cost "c" over a user-specified time horizon (e.g., 1 year), which is a function of the costs of energy tariffs, fuel costs, costs to operate energy producers, costs of pollution, the revenue from sales, or other objectives.

An example cost of tariff term is given by Equation [3]:

$$c_{tariff} = \text{Futil} + \Sigma_{i,e}\left(\text{Vutil}_{i,e} * U_{i,e}\right) + \Sigma_{i,e}\left(\text{Dutil}_{i,e} * \max(U_{i,e})\right) \qquad [3]$$

In this example, the tariff cost $c_{tariff}$ is equal to a fixed charge "Futil" plus a volumetric energy charge "Vutil" multiplied with the energy consumption "U" plus a demand charge "Dutil" multiplied with a maximum of energy consumption for any time instance. The solver 104 will try to minimize this term, simultaneous with all other objectives, by purchasing DER or manipulating load, therefore minimizing the costs the customer must pay for energy.

As described in the General Approach, one or more objective functions are solved twice in succession by solvers 103, 104, using user-specified and/or forecasted input data 102a. In this example, normalized representative forecasts for the price of electricity, natural gas, energy, solar PV and Canadian CO2 tax are used as shown in FIG. 5. The load forecast is not shown in FIG. 5 but is assumed to increase at a fixed rate of x% (e.g., 2% per year). All other forecasted prices are assumed to not increase for this example. For this example, Canadian CO2 tax (shown as a solid line with diamond markers) increases by 50% every year until 2021, where it remains flat. For this example, the optimization starts at year 2019 and only considers prices for that year. Therefore, in the first iteration, the carbon is 50% higher than it was in 2019 due to the 50% increase in Canadian CO2 tax. For this example, the energy system is assumed not to have any currently existing on-site generators.

Following initialization using input data 102, the optimization process begins where a linear program is solved twice successively by solvers 103 and 104. The first solution output by solver 103 represents the "as-is" or "current" operating state of the energy system, by restricting any new investment. This solution determines the operating conditions (e.g., operating costs, emissions) of the energy system in its current operating state. These operating conditions are used as additional input into solver 104 that solves the linear program by removing the restriction on investment to purchase energy generation resources to improve the operating conditions of the energy system.

The operating conditions from both solvers, along with the investments made are stored in database 106 for reporting purposes. The new investments made also represent an input into the solvers 103, 104 during the next iteration, where the invested generators are now considered existing assets. For this example, the new investments made were 150 kW of solar photovoltaic generators, and a 250 kW natural gas generator. Therefore, in the second iteration of the method (year 2), the system is assumed to have those generation sources when running solver 103.

In addition to the existing on-site generation changing, the rest of the input data 102 is updated based on the user-specified and/or forecasted data. For this example, that means all data are updated to reflect 2020 prices, where in this example the price of carbon has increased by 100% since 2018.

The two phase solution described above is repeated in a iterative loop, where operating conditions and new investments are determined, sent to the databases, and used to update the existing energy system. The iterative loop is repeated for as long as the user specifies, which will determine the operation and investment summary for that specified period of years. In this example, the total cost is given per year of the project lifetime as described in FIG. 3.

If longer horizons are used than a single year, the procedure and optimization formulation described are the same. The difference is the length of the data fed into the solvers 103, 104. For example, the data fed into solvers 103, 104 in the current example are included in data vectors of length 8760, indicating hourly data for a year. If a three-year horizon is considered (Y=3), the data vectors would be 8760x3=26,280. The total number iterations also remains the same, which is equal to the number years or time horizon "Y" the user wants to simulate the energy system.

*Example Process*

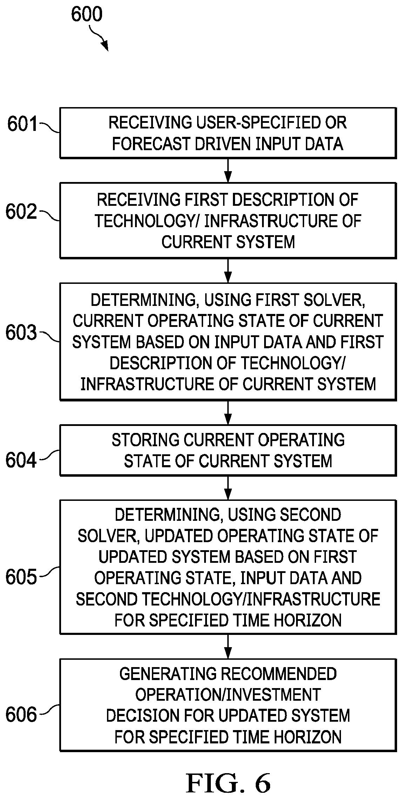

FIG. 6 is a flow diagram of an adaptive, multiyear planning process 600 for energy systems, microgrids and DERs, according to an embodiment. Process 600 can be implemented using the client and/or server architectures described in reference to FIGS. 7 and 8.

Process 600 begins by receiving a user-specified or forecast driven input data (601) and a first description of technology or infrastructure of a current system (602). Process 600 continues by determining, using a first solver, a current operating state of the current system based on the input data and the first description of technology or infrastructure of the system (603) and storing the current operating state of the current system (604) in a database. Process 600 continues by determining, using a second solver and based at least in part on the stored current operating state of the current system and a second description of technology or infrastructure of the system, an updated operating state of the system for a specified time horizon (605). Process 600 continues by generating, through an output device, a recommended operation or investment decision for the system for the specified time horizon (606).

*Example Client Architecture*

FIG. 7 is a block diagram of example client device architecture 700 for implementing the features and processes described in reference to FIGS. 1-6. Architecture 700 may be implemented in any mobile device for implementing the features and processes described in reference to FIGS. 1-6, including but not limited to portable computers, smart phones and tablet computers, game consoles, wearable computers and the like. Architecture 700 may include memory interface 702, data processor(s), image processor(s) or central processing unit(s) 704, and peripherals interface 706. Memory interface 702, processor(s) 704 or peripherals interface 706 may be separate components or may be integrated in one or more integrated circuits. One or more communication buses or signal lines may couple the various components.

Sensors, devices, and subsystems may be coupled to peripherals interface 706 to facilitate multiple functionalities. For example, motion sensor 710, light sensor 712, and proximity sensor 714 may be coupled to peripherals interface 706 to facilitate orientation, lighting, and proximity functions of the device. For example, in some implementations, light sensor 712 may be utilized to facilitate adjusting the brightness of touch surface 746. In some implementations, motion sensor 710 (e.g., an accelerometer, gyros) may be utilized to detect movement and orientation of the device. Accordingly, display objects or media may be presented according to a detected orientation (e.g., portrait or landscape). Other sensors may also be connected to peripherals interface 706, such as a temperature sensor, a biometric sensor, or other sensing device, to facilitate related functionalities.

Location processor 715 (e.g., GPS receiver chip) may be connected to peripherals interface 706 to provide geo-referencing. Electronic magnetometer 716 (e.g., an integrated circuit chip) may also be connected to peripherals interface 706 to provide data that may be used to determine the direction of magnetic North. Thus, electronic magnetometer 716 may be used with an electronic compass application.

Camera subsystem 720 and an optical sensor 722, e.g., a charged coupled device (CCD) or a complementary metal-oxide semiconductor (CMOS) optical sensor, may be utilized to facilitate camera functions, such as recording photographs and video clips.

Communication functions may be facilitated through one or more communication subsystems 724. Communication subsystem(s) 724 may include one or more wireless communication subsystems. Wireless communication subsystems 724 may include radio frequency receivers and transmitters and/or optical (e.g., infrared) receivers and transmitters. Wired communication systems 724 may include a port, e.g., a Universal Serial Bus (USB) port or some other wired port connection that may be used to establish a wired connection to other computing devices, such as other communication devices, network access devices, a personal computer, a printer, a display screen, or other processing devices capable of receiving or transmitting data.

The specific design and implementation of the communication subsystem 724 may depend on the communication network(s) or medium(s) over which the device is intended to operate. For example, a device may include wireless communication subsystems designed to operate using known or standardized protocols, including but not limited to: global system for mobile communications (GSM), GPRS, enhanced data GSM environment (EDGE), IEEE 802.x (e.g., Wi-Fi, Wi-Max), code division multiple access (CDMA), Near Field Communications (NFC), Bluetooth® (including classic Bluetooth® and Bluetooth® low energy (BLE)). Wireless communication subsystems 724 may include hosting protocols such that the device may be configured as a base station for other wireless devices. As another example, the communication subsystems may allow the device to synchronize with a host device using one or more protocols, such as, for example, the TCP/IP protocol, HTTP protocol, UDP protocol, and any other known or standardized protocol.

Audio subsystem 726 may be coupled to a speaker 728 and one or more microphones 730 to facilitate voice-enabled functions, such as voice recognition, voice replication, digital recording, and telephony functions.

I/O subsystem 740 may include touch controller 742 and/or other input controller(s) 744. Touch controller 742 may be coupled to a touch surface 746. Touch surface 746 and touch controller 742 may, for example, detect contact and movement or break thereof using any of a number of touch sensitivity technologies, including but not limited to capacitive, resistive, infrared, and surface acoustic wave technologies, as well as other proximity sensor arrays or other elements for determining one or more points of contact with touch surface 746. In one implementation, touch surface 746 may display virtual or soft buttons and a virtual keyboard, which may be used as an input/output device by the user.

Other input controller(s) 744 may be coupled to other input/control devices 748, such as one or more buttons, rocker switches, thumb-wheel, infrared port, USB port, and/or a pointer device such as a stylus. The one or more buttons (not shown) may include an up/down button for volume control of speaker 728 and/or microphone 730.

In some implementations, architecture 700 may present recorded audio and/or video files, such as MP3, AAC, and MPEG video files. In some implementations, architecture 700 may include the functionality of an MP3 player and may include a pin connector for tethering to other devices. Other input/output and control devices may be used.

Memory interface 702 may be coupled to memory 750. Memory 750 may include high-speed random access memory or non-volatile memory, such as one or more magnetic disk storage devices, one or more optical storage devices, or flash memory (e.g., NAND, NOR). Memory 750 may store operating system 752, such as Darwin, RTXC, LINUX, UNIX, OS X, WINDOWS or an embedded operating system such as VxWorks. Operating system 752 may include instructions for handling basic system services and for performing hardware dependent tasks. In some implementations, operating system 752 may include a kernel (e.g., UNIX kernel).

Memory 750 may also store communication instructions 754 to facilitate communicating with one or more additional devices, one or more computers or servers, including peer-to-peer communications, as described in reference to FIGS. 1-4. Communication instructions 754 may also be used to select an operational mode or communication medium for use by the device, based on a geographic location (obtained by the GPS/Navigation instructions 768) of the device. Memory 750 may include graphical user interface instructions 756 to facilitate graphical user interface processing, including a touch model for interpreting touch inputs and gestures; sensor processing instructions 758 to facilitate sensor-related processing and functions; phone instructions 760 to facilitate phone-related processes and functions; electronic messaging instructions 762 to facilitate electronic-messaging related processes and functions; web browsing instructions 764 to facilitate web browsing-related processes and functions; media processing instructions 766 to facilitate media processing-related processes and functions; GPS/Navigation instructions 768 to facilitate GPS and navigation-related processes; camera instructions 770 to facilitate camera-related processes and functions; and other instructions 772 for performing some or all of the processes, as described in reference to FIGS. 1-6.

Each of the above identified instructions and applications may correspond to a set of instructions for performing one or more functions described above. These instructions need not be implemented as separate software programs, procedures, or modules. Memory 750 may include additional instructions or fewer instructions. Furthermore, various functions of the device may be implemented in hardware and/or in software, including in one or more signal processing and/or application specific integrated circuits (ASICs).

*Example Server Architecture*

Figure 8 is a block diagram of example server architecture 800 for implementing the features and processes described in reference to FIGS. 1-6. Other architectures are possible, including architectures with more or fewer components. In some implementations, architecture 800 includes one or more processors 802 (e.g., dual-core Intel® Xeon® Processors), one or more output devices 804 (e.g., LCD), one or more network interfaces 806, one or more input devices 808 (e.g., mouse, keyboard, touch-sensitive display) and one or more non-transitory computer-readable mediums 812b and memory 812a (e.g., RAM, ROM, SDRAM, hard disk, optical disk, flash memory, etc.). These components can exchange communications and data over one or more communication channels 810 (e.g., buses), which can utilize various hardware and software for facilitating the transfer of data and control signals between components.

The term "non-transitory computer-readable medium" refers to any medium that participates in providing instructions to processor 802 for execution, including without limitation, non-volatile media (e.g., optical or magnetic disks), volatile media (e.g., memory) and transmission media. Transmission media includes, without limitation, coaxial cables, copper wire and fiber optics.

Computer-readable mediums 812b or memory 812a can further include operating system 814 (e.g., Mac OS® server, Windows® NT server), network communication module 816 and dynamic content presentation module 818. Operating system 814 can be multi-user, multiprocessing, multitasking, multithreading, real time, etc. Operating system 814 performs basic tasks, including but not limited to: recognizing input from and providing output to devices 804; keeping track and managing files and directories on storage devices 812b and memory 812a; controlling peripheral devices; and managing traffic on the one or more communication channels 810. Network communications module 816 includes various components for establishing and maintaining network connections (e.g., software for implementing communication protocols, such as TCP/IP, HTTP, etc.). planning module 818 provides the features and performs the process, described in reference to FIGS. 1-6.

Architecture 800 can be included in any computer device, including one or more server computers each having one or more processing cores. Architecture 800 can be implemented in a parallel processing or peer-to-peer infrastructure or on a single device with one or more processors. Software can include multiple software components or can be a single body of code.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., SWIFT, Objective-C, C#, Java), including compiled or interpreted languages, and it can be deployed in any form, including as a stand-alone program or as a module, component, subroutine, a browser-based web application, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random-access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor or a retina display device for displaying information to the user. The computer can have a touch surface input device (e.g., a touch screen) or a keyboard and a pointing device such as a mouse or a trackball by which the user can provide input to the computer. The computer can have a voice input device for receiving voice commands from the user.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

A system of one or more computers can be configured to perform particular actions by virtue of having software, firmware, hardware, or a combination of them installed on the system that in operation causes or cause the system to perform the actions. One or more computer programs can be configured to perform particular actions by virtue of including instructions that, when executed by data processing apparatus, cause the apparatus to perform the actions.

One or more features or steps of the disclosed embodiments may be implemented using an Application Programming Interface (API). An API may define on or more parameters that are passed between a calling application and other software code (e.g., an operating system, library routine, function) that provides a service, that provides data, or that performs an operation or a computation. The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call. API calls and parameters may be implemented in any programming language. The programming language may define the vocabulary and calling convention that a programmer will employ to access functions supporting the API. In some implementations, an API call may report to an application the capabilities of a device running the application, such as input capability, output capability, processing capability, power capability, communications capability, etc.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

**EMBODIMENTS**

Although the present invention is defined in the attached claims, it should be understood that the present invention can also (alternatively) be defined in accordance with the following embodiments:

1. An adaptive multiyear planning method for an energy system, microgrid or distributed energy resource (DER), the method comprising:

receiving, using one or more processors, at least one of user-specified or forecast driven input data;
receiving, using the one or more processors, a first description of technology or infrastructure of a current system;
determining, using a first solver, a current operating state of the current system based on the input data and the first description of technology or infrastructure of the system;
storing the current operating state of the current system;
determining, using a second solver and based at least in part on the stored current operating state of the current system and a second description of technology or infrastructure of the system, an updated operating state of the system for a specified time horizon; and
generating, through an output device, a recommended operation or investment decision for the system for the specified time horizon.

2. The method of embodiment 1, wherein the recommended operation or investment decision includes at least one of an additional investment recommendation or one or more recommendations that will save cost associated with the system.

3. The method of embodiment 1 or 2, wherein the updated operating state of the system includes updated planning parameters.

4. The method of any of the preceding embodiments 1-3, further comprising:
initializing the first solver using a timeseries of data generated from an artificial intelligence-enabled, statistical or deterministic forecast.

5. The method of any of the preceding embodiments 1-4, where the current operating state of the current system includes at least one of a dispatch of existing generation sources, operational costs or resilience metrics for the specified time horizon.

6. The method of any of the preceding embodiments 1-5, wherein the second solver determines at least one of new operations or investments into one or more new technologies to achieve a lower cost operation of the system or one or more improved resilience metrics for the system.

7. The method of any of the preceding embodiments 1-6, wherein the method steps are repeated, and the time series data output in a first pass is representative of a next year through the specified time horizon.

8. The method of embodiment any of the preceding embodiments 1-7, wherein forecast driven input data is obtained using one or more of artificial intelligence, machine learning, statistical or deterministic models.

9. The method of any of the preceding embodiments 1-8, wherein the first and second solvers solve a linear program with one or more objectives, wherein the one or more objectives are minimized by the first and second solvers over the specified time horizon, subject to one or more constraints that includes at least an energy balance that is a sum of energy demand, plus energy consumed, plus energy sold from the system, with a sum of energy produced by the system plus energy purchased for the system.

10. The method of embodiment 9, wherein the one or more objectives include at least one of costs, emissions or reliability of the system.

11. The method of embodiment 9, wherein the one or more constraints includes one or more of reliability, storage, regulatory, financial, operating, power or climate constraints for the system.

12. An adaptive, multiyear economic planning apparatus for energy systems, microgrids, and distributed energy resources, the apparatus comprising:

one or more processors;

memory storing instructions that when executed by the one or more processors, causes the one or more processors to perform operations comprising:

    receiving at least one of user-specified or forecast driven input data;

    receiving a first description of technology or infrastructure of a current system;

    determining, using a first solver, a current operating state of the current system based on the input data and the first description of technology or infrastructure of the current system;

    storing the current operating state of the current system;

    determining, using a second solver and based at least in part on the stored current operating state of the current system and a second description of technology or infrastructure of the system, an updated operating state of the system for a specified time horizon; and

    generating, through an output device, a recommended operation or investment decision for the system for the specified time horizon.

13. The apparatus of embodiment 12, wherein the recommended operation or investment decision includes at least one of an additional investment recommendation or one or more recommendations that will save cost associated with the system.

14. The apparatus of embodiment 12 or 13, wherein the updated operating state of the system includes updated planning parameters.

15. The apparatus of any of the preceding embodiments 12-14, further comprising:
initializing the first solver using a timeseries of data generated from an artificial intelligence-enabled, statistical or deterministic forecast.

16. The apparatus of any of the preceding embodiments 12-15, where the current operating state of the current system includes at least one of a dispatch of existing generation sources, operational costs or resilience metrics for the specified time horizon.

17. The apparatus of any of the preceding embodiments 12-16, wherein the second solver determines at least one of new operations or investments into one or more new technologies to achieve a lower cost operation of the system or one or more improved resilience metrics for the system.

18. The apparatus of any of the preceding embodiments 12-17, wherein the operations are repeated, and the time series data output in a first pass is representative of a next year through the specified time horizon.

19. The apparatus of any of the preceding embodiments 12-18, wherein forecast driven input data is received from one or more of artificial intelligence, machine learning, statistical or deterministic models.

20. The apparatus of any of the preceding embodiments 12-19, wherein the first and second solvers solve a linear program with one or more objectives, wherein the one or more objectives are minimized over the specified time horizon, subject to a constraint that balances a sum of energy demand, energy consumed and energy sold from the updated system with a sum of energy produced by the updated system and energy purchased for the updated system.

21. The apparatus of any of the preceding embodiments 20, wherein the one or more objectives include at least one of costs, emissions or reliability of the system.

## Claims

1. An adaptive multiyear planning method for an energy system, microgrid or distributed energy resource, i.e.,DER, the method comprising:

    receiving, using one or more processors, at least one of user-specified or forecast driven input data;

    receiving, using the one or more processors, a first description of technology or infrastructure of a current system;

    determining, using a first solver, a current operating state of the current system based on the input data and the first description of technology or infrastructure of the current system;

storing the current operating state of the current system;

determining, using a second solver and based at least in part on the stored current operating state of the current system and a second description of technology or infrastructure of the system, an updated operating state of the system for a specified time horizon; and

generating, through an output device, a recommended operation or investment decision for the system for the specified time horizon.

2. The method of claim 1, wherein the recommended operation or investment decision includes at least one of an additional investment recommendation or one or more recommendations that will save cost associated with the system.

3. The method of claim 1 or 2, wherein the updated operating state of the system includes updated planning parameters.

4. The method of any of the preceding claims 1-3, further comprising:
   initializing the first solver using a timeseries of data generated from an artificial intelligence-enabled, statistical or deterministic forecast.

5. The method of any of the preceding claims 1-4, where the current operating state of the current system includes at least one of a dispatch of existing generation sources, operational costs or resilience metrics for the specified time horizon.

6. The method of any of the preceding claims 1-5, wherein the second solver determines at least one of new operations or investments into one or more new technologies to achieve a lower cost operation of the system or one or more improved resilience metrics for the system.

7. The method of any of the preceding claims 1-6, wherein the method steps are repeated, and the time series data output in a first pass is representative of a next year through the specified time horizon.

8. The method of claim any of the preceding claims 1-7, wherein forecast driven input data is obtained using or received from one or more of artificial intelligence, machine learning, statistical or deterministic models.

9. The method of any of the preceding claims 1-8, wherein the first and second solvers solve a linear program with one or more objectives, wherein the one or more objectives are minimized by the first and second solvers over the specified time horizon, subject to one or more constraints that includes at least an energy balance that is a sum of energy demand, plus energy consumed, plus energy sold from the system, with a sum of energy produced by the system plus energy purchased for the system.

10. The method of claim 9, wherein the one or more objectives include at least one of costs, emissions or reliability of the system.

11. The method of claim 9, wherein the one or more constraints includes one or more of reliability, storage, regulatory, financial, operating, power or climate constraints for the system.

12. An adaptive, multiyear economic planning apparatus for energy systems, microgrids, and distributed energy resources, the apparatus comprising:

   one or more processors;
   memory storing instructions that when executed by the one or more processors, causes the one or more processors to perform operations comprising the method of any one of claims 1 to 11.

13. The apparatus of claim 12, wherein the first and second solvers solve a linear program with one or more objectives, wherein the one or more objectives are minimized over the specified time horizon, subject to a constraint that balances a sum of energy demand, energy consumed and energy sold from the updated system with a sum of energy produced by the updated system and energy purchased for the updated system
   , and
   optionally wherein the one or more objectives include at least one of costs, emissions or reliability of the system.

EP 3 731 159 A1

```
                    ┌─────────┐
                    │  START  │
                    └────┬────┘
                         ▼
    101 ─────────┐  ┌─────────┐         102
                    │  y = 0  │    ┌────────┘
                 └─►└────┬────┘
                         ▼
┌─────────────────────────────────┐  ┌──────────────────────────────────┐
│          INPUT DATA             │  │             SOLVER               │
│ ┌─────────────────────────────┐ │  │  ┌────────────────────────────┐  │
│ │       FORECAST DRIVEN       │ │  │  │      AS-IS OPERATION:      │  │
│ │     OR USER SPECIFIED       │ │  │  │       OPTIMIZER OR         │  │
│ │  ┌───────────────────────┐  │ │  │  │        SIMULATOR           │  │
│ │  │       CLIMATE          │  │ │  │  └──────────┬─────────────────┘  │
│ │  └───────────────────────┘  │ │  │      104    │    OPERATING       │
│ │                             │ │  │          103│    EXPENSES        │
│ │  ┌───────────────────────┐  │ │  │  ┌──────────▼─────────────────┐  │
│ │  │     REGULATORY         │  │ │ ►│  │    LIBERAL INVESTMENT:     │  │
│ │  │     CONSTRAINTS        │  │ │  │  │       OPTIMIZER OR         │  │
│ │  └───────────────────────┘  │ │  │  │        SIMULATOR           │  │
│ │                             │ │  │  └────────────────────────────┘  │
│ │  ┌───────────────────────┐  │ │  └──────────────────────────────────┘
│ │  │  UTILITY STRUCTURE     │  │ │
│ │  └───────────────────────┘  │ │  ┌──────────────────────────────────┐
│ │                             │ │  │           OUTPUT DATA            │
│ │  ┌───────────────────────┐  │ │  │ ┌─────────────┐      ┌─────────┐ │
│ │  │  TECHNOLOGY COSTS      │  │ │  │ │ INVESTMENT  │      │ RECORD  │ │
│ │  └───────────────────────┘  │ │  │ │DECISIONS AND│      │INVEST.  │ │
│ │                             │ │  │ │ OPERATION   │      │ YEARLY  │ │
│ │  ┌───────────────────────┐  │ │  │ └─────────────┘      └─────────┘ │
│ │  │       DEMAND           │  │ │  │      105     106         107     │
│ │  └───────────────────────┘  │ │  └──────────────────────────────────┘
│ └─────────────────────────────┘ │
│   102a          102b            │
│ ┌─────────────────────────────┐ │
│ │  ON-SITE TECHNOLOGY/        │ │
│ │  INFRASTRUCTURE             │ │
│ └─────────────────────────────┘ │
└─────────────────────────────────┘
```

FIG. 1

## FIG. 2

RUNTIME = 0.575* YEARS + 0.655

## FIG. 3

# FIG. 4

| RELIABILITY CONSTRAINTS: OUTAGE COSTS, RELIABILITY STANDARDS, SAIDI, SAIFI, CAIDI | STORAGE CONSTRAINTS: AGING, SELF DISCHARGE | REGULATORY CONSTRAINTS: EMISSION COSTS, SUBSIDIES/INCENTIVES |
|---|---|---|

| CLIMATE CONSTRAINTS: AVAILABLE RESOURCE | OBJECT FUNCTIONS: COSTS EMISSIONS RELIABILITY | FINANCIAL CONSTRAINTS: INTEREST RATES, PAYBACK PERIODS |
|---|---|---|

| POWER CONSTRAINTS: LOSSES, POWER QUALITY | ENERGY BALANCE: DEMAND = PROVISIONS | OPERATING CONSTRAINTS: DER PERFORMANCE LIMITS |
|---|---|---|

# FIG. 5

Legend:
- ELECTRICITY PRICE (1993)
- NATURAL GAS PRICE (1993)
- ENERGY STORAGE PRICE (2010)
- SOLAR PV INSTALLATION PRICES (2006)
- CANADIAN CO2 TAX (2019)

Y-axis: NATIONAL AVERAGE PRICE (NORMALIZED)
X-axis: 1995, 2000, 2005, 2010, 2015, 2020, 2025, 2030

600

601 — RECEIVING USER-SPECIFIED OR FORECAST DRIVEN INPUT DATA

602 — RECEIVING FIRST DESCRIPTION OF TECHNOLOGY/ INFRASTRUCTURE OF CURRENT SYSTEM

603 — DETERMINING, USING FIRST SOLVER, CURRENT OPERATING STATE OF CURRENT SYSTEM BASED ON INPUT DATA AND FIRST DESCRIPTION OF TECHNOLOGY/ INFRASTRUCTURE OF CURRENT SYSTEM

604 — STORING CURRENT OPERATING STATE OF CURRENT SYSTEM

605 — DETERMINING, USING SECOND SOLVER, UPDATED OPERATING STATE OF UPDATED SYSTEM BASED ON FIRST OPERATING STATE, INPUT DATA AND SECOND TECHNOLOGY/INFRASTRUCTURE FOR SPECIFIED TIME HORIZON

606 — GENERATING RECOMMENDED OPERATION/INVESTMENT DECISION FOR UPDATED SYSTEM FOR SPECIFIED TIME HORIZON

FIG. 6

FIG. 7

FIG. 8

Europäisches
Patentamt

European
Patent Office

Office européen
des brevets

# EUROPEAN SEARCH REPORT

Application Number

EP 20 17 0947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/023852 A1 (EXELON GENERATION COMPANY LLC [US]) 9 February 2017 (2017-02-09) * figures 1-3 * * paragraph [0058] * * paragraph [0059] * * paragraph [0060] * * paragraph [0048] * ----- | 1-13 | INV. G06Q10/04 G06Q30/02 G06Q10/06 G06Q50/06 |
| X | US 2019/036340 A1 (MEEKER RICHARD H [US] ET AL) 31 January 2019 (2019-01-31) * figures 1,6,7,10-13 * * paragraph [0018] * * paragraph [0026] * * paragraph [0027] * * paragraph [0028] * * claims 1-20 * ----- | 1-13 | |

| | | | TECHNICAL FIELDS SEARCHED (IPC) |
|---|---|---|---|
| | | | G06Q |

The present search report has been drawn up for all claims

| Place of search | Date of completion of the search | Examiner |
|---|---|---|
| Munich | 7 September 2020 | Mennerun, Steeve |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 17 0947

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2020

| Patent document cited in search report | | Publication date | Patent family member(s) | | Publication date |
|---|---|---|---|---|---|
| WO 2017023852 | A1 | 09-02-2017 | CA | 2994410 A1 | 09-02-2017 |
| | | | EP | 3329456 A1 | 06-06-2018 |
| | | | US | 2018225614 A1 | 09-08-2018 |
| | | | WO | 2017023852 A1 | 09-02-2017 |
| US 2019036340 | A1 | 31-01-2019 | US | 2019036340 A1 | 31-01-2019 |
| | | | WO | 2019023715 A1 | 31-01-2019 |

EPO FORM P0459

For more details about this annex : see Official Journal of the European Patent Office, No. 12/82

**EP 3 731 159 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 62837012 A